# EUROPEAN PATENT APPLICATION

(11) **EP 3 778 225 A1**
(43) Date of publication of application: **17.02.2021**
(21) Application number: 19777404.5
(22) Date of filing: 22.03.2019
(51) Int. Cl.: B32B 27/10, B32B 27/20, B32B 27/30, B32B 27/32, D06N 3/00, D21H 27/00, D21H 27/30

(54) **LAMINATE AND PROCESSING PAPER**

(30) Priority: 29.03.2018 JP 2018065696
(71) Applicant: LINTEC Corporation, Tokyo 173-0001 (JP)
(72) Inventor: SASAKI, Yasushi, Tokyo 173-0001 (JP); TAKATA, Yoshio, Tokyo 173-0001 (JP); TAKAOKA, Kenji, Tokyo 173-0001 (JP); KANEKO, Satoshi, Tokyo 173-0001 (JP); KAMO, Masayasu, Tokyo 173-0001 (JP)
(74) Representative: Gille Hrabal
(86) International application number: PCT/JP2019/012185
(87) International publication number: WO 2019/188823

(57) **Abstract**

Provided are a laminate and a casting paper which, though using a smooth base paper, can sufficiently secure the adhesiveness between the base paper and a release layer and can maintain the adhesiveness even at high temperatures. The laminate has a laminated structure of a base paper 11, an adhesion-enhancing layer (A) 12 and a 4-methyl-1-pentene-based resin layer (B) 13 laminated in that order, wherein the adhesion-enhancing layer (A) 12 contains necklace-like colloidal silica-derived silica particles (S) and a polyvinyl alcohol (P), and the content ratio of the silica particles (S) to the polyvinyl alcohol (P) (S/P) is 20/5 to 20/30 as a ratio by mass.

## Description

### Technical Field

The present invention relates to a laminate and a casting paper.

### Background Art

Recently, laminates having various configurations have become utilized in various industrial scenes.

For example, for production of synthetic leathers, prepregs and plastic films, laminates such as process release papers having a base paper and a release layer are often used.

As such a laminate, PTL 1 describes a laminate having a base paper and a release layer laminated on the base paper, wherein the release layer contains 80 to 97 parts by mass of (A) a 4-methyl-1-pentene-based polymer and contains 3 to 20 parts by mass of (B) a copolymer of ethylene and ethyl acrylate.

### Citation List

### Patent Literature

PTL 1: JP 8-25580 A

### Summary of Invention

### Technical Problem

Recently, from the viewpoint of improving the beautifulness of the surface design of synthetic leathers and plastic film, an industrial demand for improving the sharpness of the surface of a release layer of a laminate has become increased. Namely, in the case where smoothness is required for the surface of synthetic leathers and others, the surface of a release layer is made to be smoother, or when an embossing design is to be given to the surface of synthetic leathers and others, the surface of a release layer is expected to have a sharper emboss profile.

For satisfying these demands, it is considered to use a smooth base paper so as to minimize the roughness of the release layer that may be caused by the roughness of the base paper. Accordingly, it is considered that the sharpness of the surface of the release layer of a laminate can be improved and the beautifulness of the surface design can be improved further more.

However, with improving the smoothness of a base paper, it would become more difficult to secure the adhesiveness owing to an anchor effect between the base paper and a release layer. In particular, when a laminate is exposed to high temperatures, it would become more difficult to secure the adhesiveness. The problem could not be solved by conventional adhesion-enhancing treatment such as corona discharge treatment or ozone treatment.

In addition, the resin layer formed of a 4-methyl-1-pentene-based polymer used in PTL 1 is poor in adhesiveness to a base paper at high temperatures, though excellent in heat resistance, releasability and chemical resistance.

An object of the present invention is to provide a laminate and a casting paper using a 4-methyl-1-pentene-based resin as a release layer, which can sufficiently secure adhesiveness between a base paper and the release layer even when a smooth base paper is used, and which can maintain the adhesiveness even at high temperatures.

### Solution to Problem

The present inventors have found the following (1) to (3), and have completed the present invention.
(1) The laminate has a laminated structure of a base paper, an adhesion-enhancing layer and a 4-methyl-1-pentene-based resin layer as laminated in that order.
(2) The adhesion-enhancing layer contains silica particles derived from a necklace-like colloidal silica and a polyvinyl alcohol, and the necklace-like colloidal silica-derived silica particles and the polyvinyl alcohol are in a specific content ratio.
(3) Because of (1) and (2), the adhesiveness between the 4-methyl-1-pentene-based resin layer as a release layer and the base paper can be sufficiently secured even though the 4-methyl-1-pentene-based resin having poor adhesiveness is used, and in addition, the adhesiveness can be sufficiently secured even at high temperatures.

Specifically, the present invention relates to the following [1] to [5].
[1] A laminate having a laminated structure of a base paper, an adhesion-enhancing layer (A) and a 4-methyl-1-pentene-based resin layer (B) laminated in that order, wherein the adhesion-enhancing layer (A) contains necklace-like colloidal silica-derived silica particles (S) and a polyvinyl alcohol (P), and the content ratio of the silica particles (S) to the polyvinyl alcohol (P) (S/P) is 20/5 to 20/30 as a ratio by mass.
[2] The laminate according to the above [1], wherein the necklace-like colloidal silica is a pearl necklace-like one.
[3] The laminate according to the above [1] or [2], wherein the 4-methyl-1-pentene-based resin layer (B) is formed of 2 or more layers and the outermost layer at least on the side opposite to the adhesion-enhancing layer (A) has a tensile modulus of elasticity of 1000 MPa or more.
[4] A casting paper including the laminate of any one of the above [1] to [3].
[5] A casting paper for synthetic leather production, including the laminate of any one of the above [1] to [3].

### Advantageous Effects of Invention

According to the present invention, there can be provided a laminate and a casting paper using a 4-methyl-1-pentene-based resin as a release layer, which can sufficiently secure adhesiveness between a base paper and the release layer even when a smooth base paper is used, and which can maintain the adhesiveness even at high temperatures.

### Brief Description of Drawings

Fig. 1 is a schematic cross-sectional view of a laminate of one embodiment of the present invention.
Fig. 2 is a schematic cross-sectional view of a laminate of another embodiment of the present invention.

### Description of Embodiments

The laminate of the present invention has a laminated structure of a base paper, an adhesion-enhancing layer (A) and a 4-methyl-1-pentene-based resin layer (B) laminated in that order.

The adhesion-enhancing layer (A) contains necklace-like colloidal silica-derived silica particles (S) and a polyvinyl alcohol (P). The content ratio of the silica particles (S) to the polyvinyl alcohol (P) (S/P) is 20/5 to 20/30 as a ratio by mass.

Hereinunder the configuration of the laminate of the present invention is first described, and then the constituent elements of the laminate, and a production method and a use method for the laminate are described sequentially.

### [Configuration of Laminate]

The laminate of the present invention has a laminated structure of a base paper, an adhesion-enhancing layer (A) and a 4-methyl-1-pentene-based resin layer (B) laminated in that order.

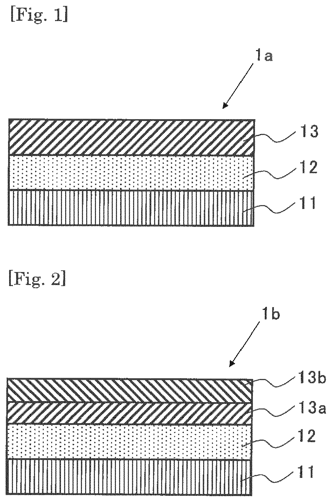

One embodiment of the laminate of the present invention is, for example, a laminate 1a shown in Fig. 1.

The laminate 1a shown in Fig. 1 has an adhesion-enhancing layer (A) 12 and a 4-methyl-1-pentene-based resin layer (B) 13 laminated in that order. Namely, the laminate 1a shown in Fig. 1 is a laminate using one surface alone of the base paper 11.

In the laminate 1a shown in Fig. 1, the base paper 11 and the adhesion-enhancing layer (A) 12, and the adhesion-enhancing layer (A) 12 and the 4-methyl-1-pentene-based resin layer 13 are directly laminated not via any other layer. Accordingly, the laminate 1a shown in Fig. 1 is formed of the base paper 11, the adhesion-enhancing layer (A) 12 and the 4-methyl-1-pentene-based resin layer (B) 13 alone.

However, the laminate 1a shown in Fig. 1 is not always restricted to such a configuration. For example, in at least any of between the base paper 11 and the adhesion-enhancing layer (A) 12, and between the adhesion-enhancing layer (A) 12 and the 4-methyl-1-pentene-based resin layer (B) 13, any other layer may be provided as needed. Also for example, the base paper 11 may be a single layer or has a multilayer structure.

Here, in the laminate of one embodiment of the present invention, the 4-methyl-1-pentene-based resin layer (B) 13 is preferably a multilayer structure.

The laminate 1b shown in Fig. 2 is a laminate differing from the laminate 1a shown in Fig. 1 in that the 4-methyl-1-pentene-based resin layer (B) 13 has a two-layer structure. In detail, a 4-methyl-1-pentene-based resin layer (B) 13a is arranged on the side of the adhesion-enhancing layer (A) 12, and a 4-methyl-1-pentene-based resin layer (B) 13b is provided as an outermost layer of the laminate 1b.

As in the laminate 1b shown in Fig. 2, the 4-methyl-1-pentene-based resin layer (B) may have a multilayer structure in such a manner that a soft 4-methyl-1-pentene-based resin layer 13a is arranged on the side of the adhesion-enhancing layer (A) 12 and a hard 4-methyl-1-pentene-based resin layer 13b is arranged on the outermost layer side, and accordingly, the adhesiveness between the base paper and the 4-methyl-1-pentene-based resin layer (B) can be bettered. In addition, the outermost layer can be readily prevented from cracking, and the laminate can be readily prevented from curling.

In the above-mentioned embodiments, the adhesion-enhancing layer (A) and the 4-methyl-1-pentene-based resin layer (B) are laminated in that order on one surface of the base paper, but in the laminate of another embodiment of the present invention, the adhesion-enhancing layer (A) and the 4-methyl-1-pentene-based resin layer (B) may be laminated in that order on both surfaces of the base paper.

In the laminate of the present invention, the adhesion-enhancing layer (A) is provided between the base paper and the 4-methyl-1-pentene-based resin layer (B). The adhesion-enhancing layer (A) has a specific composition as described below, and therefore, even though a poorly-adhesive 4-methyl-1-pentene-based resin is used, the adhesiveness between the base paper and the 4-methyl-1-pentene-based resin layer (B) can be sufficiently secured. In particular, even when the 4-methyl-1-pentene-based resin layer (B) is laminated on a highly-smooth surface of the base paper, sufficient adhesiveness thereof to the base paper can be secured. Moreover, even after exposed to processing at high temperatures, the adhesiveness can be still maintained.

### [Base Paper]

The base paper functions as a support of the laminate of the present invention.

Here, in the laminate of one embodiment of the present invention, from the viewpoint of further improving the sharpness of the surface of the 4-methyl-1-pentene-based resin layer (B) that functions as a release layer, the Oken-type smoothness of the surface on the side of the adhesion-enhancing layer (A) of the base paper is preferably 40 seconds or more, more preferably 100 seconds or more, even more preferably 500 seconds or more, further more preferably 1000 seconds or more.

The Oken-type smoothness is measured according to JIS P8155:2010. Specifically, it is measured according to the method described in the section of Examples.

The laminate of one embodiment of the present invention uses such a highly-smooth base paper, and therefore the surface roughness of the 4-methyl-1-pentene-based resin layer (B) can be minimized and, as a result, the sharpness of the outermost surface of the laminate, that is, the surface of the 4-methyl-1-pentene-based resin layer (B) can be thereby bettered.

The base paper for use in the present invention is not specifically limited so far as it is a base paper that functions as a support, and any ordinary base paper can be used. The base paper may be a single layer or may have a multilayer structure.

In one embodiment of the present invention, the base paper is preferably such that the Oken-type smoothness of the surface thereof at least on the side of the adhesion-enhancing layer (A) is 40 seconds or more, and may be a single layer or may have a multilayer structure. For example, the base paper includes wood-free paper, glassine paper, art paper, coated paper and cast-coated paper.

Among these, from the viewpoint of the smoothness of the base paper, the degree of the strength of the base paper and the easy availability thereof, wood-free paper, coated paper and cast-coated paper are preferred, coated paper and cast-coated paper are more preferred, and cast-coated paper is even more preferred.

In the case where the roughness of the base paper differs between the two sides thereof, the surface whose Oken-type smoothness is to be measured is the surface of the base paper on which the adhesion-enhancing layer (A) is to be provided. Namely, regarding cast-coated paper, in the case where the adhesion-enhancing layer (A) is provided on the cast-coated surface thereof and where the 4-methyl-1-pentene-based resin layer (B) is on the adhesion-enhancing layer (A), the cast-coated surface of the cast-coated paper is the surface whose Oken-type smoothness is to be measured.

Though not specifically limited, the thickness of the base paper is generally 5 to 1000 pm, preferably 5 to 500 µm, more preferably 5 to 300 µm, even more preferably 10 to 200 µm.

Though not specifically limited, the weight of the base paper is, from the viewpoint of enhancing paper strength to improve processability, and from the viewpoint of easiness in peeling from an adherend, preferably 50 to 1000 g/m², more preferably 70 to 300 g/m², even more preferably 100 to 200 g/m².

### [Adhesion-enhancing Layer (A)]

In the present invention, the adhesion-enhancing layer (A) contains necklace-like colloidal silica-derived silica particles (S) and a polyvinyl alcohol (P). Also in the present invention, the content ratio of the silica particles (S) to the polyvinyl alcohol (P) (S/P) is 20/5 to 20/30 as a ratio by mass.

When the adhesion-enhancing layer (A) has such a composition, the adhesiveness between the base paper and the 4-methyl-1-pentene-based resin layer (B) can be sufficiently secured, and moreover, the adhesiveness can be maintained even at high temperatures. Specifically, the adhesiveness can be maintained even at 180°C. Further, even at 220°C, the adhesiveness can be maintained.

In the case where any other material than the necklace-like colloidal silica-derived silica particles (S) is used as a filler, such an effect cannot be attained. For example, even when spherical silica particles are used as a filler, such an effect cannot be attained.

Also in the case where the content ratio of the silica particles (S) to the polyvinyl alcohol (P) (S/P) falls outside the above-mentioned range, the above-mentioned effect cannot also be attained.

In one embodiment of the present invention, the adhesion-enhancing layer (A) may contain any other component than the above-mentioned components (S) and (P) within a range not detracting from the advantageous effects of the present invention.

In one embodiment of the present invention, the total content of the above-mentioned components (S) and (P) in the adhesion-enhancing layer (A) is based on the adhesion-enhancing layer (A) (100% by mass), preferably 70 to 100% by mass, more preferably 80 to 100% by mass, even more preferably 90 to 100% by mass, further more preferably 95 to 100% by mass.

Hereinunder the necklace-like colloidal silica-derived silica particles (S), the polyvinyl alcohol (P) and the content ratio of these are described in detail.

### <Necklace-like colloidal silica-derived silica particles (S)>

The necklace-like colloidal silica-derived silica particles (S) are used as a water-soluble filler in the adhesion-enhancing layer (A).

Necklace-like colloidal silica is also called a rosary-like colloidal silica, and is a secondary aggregate of silica particles having a structure where plural silica particles are aggregated in a linear or branched manner. The aggregated structure may be a closed structure, or may also be an open structure.

Here, in the laminate of the present invention, it is considered that the adhesion-enhancing layer (A) is in a dry state. Consequently, in the adhesion-enhancing layer (A), the necklace-like colloidal silica does not exist at least in a colloidal state.

However, in the adhesion-enhancing layer (A) in a dry state, it is difficult to specify and define the structure and the characteristics of the necklace-like colloidal silica. Further, in the adhesion-enhancing layer (A) in a dry state, even when the structure of the necklace-like colloidal silica is tried to be specified according to a known analysis method, it is obvious that an extremely complicated analysis method is desired including decomposition of the laminate, partial cleavage of the adhesion-enhancing layer (A) and further establishment of a structure observing method.

Accordingly, the situation is that, in the adhesion-enhancing layer (A) in a dry state, it is not almost realistic to directly specify the necklace-like colloidal silica by the structure or the characteristics thereof.

Consequently, in the laminate of the present invention, an expression of "necklace-like colloidal silica-derived silica particles (S)" is used, and the silica particles (S) are defined by the condition in blending thereof.

An average primary particle size of the necklace-like colloidal silica is preferably 0.001 to 0.100 µm, more preferably 0.005 to 0.050 µm, even more preferably 0.010 to 0.030 µm.

An average particle size of the necklace-like colloidal silica is preferably 0.030 to 0.200 µm, more preferably 0.040 to 0.150 µm.

The average primary particle size of the necklace-like colloidal silica is a value converted from a measured value of the specific surface area thereof according to the BET adsorption method (according to JIS Z8830:2013) (under presumption that the primary particles are spherical and poreless particles), and the average particle size is a measured value according to a dynamic light scattering method (according to JIS Z8828:2013).

### <Polyvinyl Alcohol (P)>

The polyvinyl alcohol (P) is used as a water-soluble binder in the adhesion-enhancing layer (A).

The polyvinyl alcohol (P) includes a modified polyvinyl alcohol in addition to an ordinary polyvinyl alcohol prepared through hydrolysis of a polyvinyl acetate. The modified polyvinyl alcohol includes a cationic modified polyvinyl, an anionic modified polyvinyl alcohol, a nonionic modified polyvinyl alcohol, and a vinyl alcohol-based polymer. From the viewpoint of bettering the mixed condition of the polyvinyl alcohol (P) and the silica particles (S), preferably, the charge of the polyvinyl alcohol (P) is the same as the charge of the silica particles (S).

From the viewpoint of preventing cracking in forming the adhesion-enhancing layer (A), from the viewpoint of bettering temporal stability of an aqueous solution to form the adhesion-enhancing layer (A), and from the viewpoint of bettering heat resistance of the adhesion-enhancing layer (A), preferably used is a polyvinyl alcohol prepared by hydrolyzing a polyvinyl acetate and having an average polymerization degree of 500 or more, more preferably an average polymerization degree of 500 to 3000, even more preferably 500 to 1700.

The saponification degree of the polyvinyl alcohol is, from the viewpoint of bettering water resistance of the adhesion-enhancing layer (A), preferably 70 to 100%, more preferably 80 to 99.5%, even more preferably 90 to 99.5%, further more preferably 95 to 99.5%.

One alone or two or more kinds of polyvinyl alcohols (P) can be used either singly or in combination. In the case where two or more kinds of polyvinyl alcohols (P) are used in combination, preferably, they are combined in such a manner that the average polymerization degree and the saponification degree of the resultant mixture can fall within the above-mentioned range.

In one embodiment of the present invention, the polyvinyl alcohol (P) may contain any other component than a polyvinyl alcohol within a range not detracting from the advantageous effects of the present invention. For example, the polyvinyl alcohol (P) may contain additives such as a waterproofing agent, a tackifier, a defoaming agent and a preservative. However, even in the absence of such additives, the effect of the present invention can be exerted.

### <Content Ratio of silica particles (S) to polyvinyl alcohol (P)>

The content ratio of the silica particles (S) to the polyvinyl alcohol (P) (S/P) is 20/5 to 20/30 as a ratio by mass. From the viewpoint of further improving the adhesion force of the adhesion-enhancing layer (A) to better the adhesiveness between the base paper and the 4-methyl-1-pentene resin layer (B), and further from the viewpoint of bettering the adhesiveness at high temperatures (specifically, at higher than 180°C to 220°C, especially 200 to 220°C), the content ratio is preferably 20/5 to 20/20, more preferably 20/6.7 to 20/15, even more preferably 20/10 to 20/15.

The mass ratio is a value as calculated in terms of the active ingredient (solid content) excluding the diluent solvent.

### <Diluent Solvent>

The necklace-like colloidal silica and the polyvinyl alcohol (P) are mixed in the above-mentioned content ratio, and diluted with water to give an aqueous solution for adhesion-enhancing layer formation.

The adhesion-enhancing layer (A) can be formed in the form of such an aqueous coating liquid, and therefore has high stability.

The active ingredient (solid content) concentration of the necklace-like colloidal silica and the polyvinyl alcohol (P) in the aqueous solution for adhesion-enhancing layer formation is, for example, 1 to 20% by mass, more preferably 3 to 15% by mass, even more preferably 5 to 15% by mass.

### <Coating Amount for adhesion-enhancing layer (A)>

Though not specifically limited, the coating amount of the adhesion-enhancing layer (A) is, from the viewpoint of bettering the adhesiveness between the base paper and the 4-methyl-1-pentene-based resin layer (B), preferably 0.1 to 10 g/m², more preferably 0.5 to 5 g/m², even more preferably 1 to 3 g/m². When the coating amount for the adhesion-enhancing layer (A) is 0.1 g/m² or more, the aqueous solution for adhesion-enhancing layer formation can be kept in sufficient contact with the 4-methyl-1-pentene-based resin layer (B) even though it penetrates into the base paper, and therefore the resultant layer can exert adhesiveness.

In this description, unless otherwise specifically indicated, the coating amount means a mass per unit area of the coating liquid after coating and drying.

### [4-Methyl-1-pentene-based Resin Layer (B)]

The 4-methyl-1-pentene-based resin layer (B) functions as a release layer in the laminate of the present invention.

The 4-methyl-1-pentene-based resin layer (B) for use in the laminate of the present invention is not specifically limited, and can be a 4-methyl-1-pentene-based resin layer formed of various types of 4-methyl-1-pentene-based resin.

The 4-methyl-1-pentene-based resin layer (B) may be a single layer or may have a multilayer structure. The 4-methyl-1-pentene-based resin layer (B) may be formed of one or two or more kinds of 4-methyl-1-pentene-based resins.

Here, in the laminate of one embodiment of the present invention, preferably, the 4-methyl-1-pentene-based resin layer (B) is formed of 2 or more layers, and at least the outermost layer on the side opposite to the adhesion-enhancing layer (A) has a tensile modulus of elasticity of 1000 MPa or more, more preferably 1300 MPa or more, even more preferably 1600 MPa or more, further more preferably 1800 MPa or more. The tensile modulus of elasticity of the outermost layer is generally 2500 MPa or less.

When the 4-methyl-1-pentene-based resin layer (B) has such a constitution, the surface sharpness of the 4-methyl-1-pentene-based resin layer (B) can be kept excellent even at high temperatures of 180°C, further at 220°C.

In this description, the tensile modulus of elasticity is a value measured according to a tensile test ASTM D638, and specifically, it is a value measured according to the method described in the section of Examples.

In the laminate of one embodiment of the present invention where the 4-methyl-1-pentene-based resin layer (B) is formed of 2 or more layers, from the viewpoint of bettering the adhesiveness between the base paper and the 4-methyl-1-pentene-based resin layer (B), from the viewpoint of preventing the outermost layer from cracking, and from the viewpoint of preventing the laminate from curling, preferably, a hard 4-methyl-1-pentene-based resin layer is arranged on the outermost layer side (on the side opposite to the adhesion-enhancing layer (A)) of the laminate and a soft 4-methyl-1-pentene-based resin layer is arranged on the side of the adhesion-enhancing layer (A). Specifically, at least the outermost layer on the side opposite to the adhesion-enhancing layer (A) has a tensile modulus of elasticity of 1000 MPa or more, more preferably 1300 MPa or more, even more preferably 1600 MPa or more, further more preferably 1800 MPa or more. The tensile modulus of elasticity of the outermost layer is generally 2500 MPa or less. Also preferably, at least the layer on the side of the adhesion-enhancing layer (A) has a tensile modulus of elasticity of less than 1000 MPa, more preferably 950 MPa or less, even more preferably 900 MPa or less. Though not specifically limited, the lowermost value is generally 600 MPa. More preferably, the hardness of the 4-methyl-1-pentene-based resin layer is gradually lowered within the above-mentioned numerical range, from the outermost layer side of the laminate toward the side of the adhesion-enhancing layer (A) thereof.

The thickness of the 4-methyl-1-pentene-based resin layer (B) is, from the viewpoint of bettering the sharpness of the surface of the 4-methyl-1-pentene-based resin layer (B), from the viewpoint of preventing the laminate from curling, and from the viewpoint of production cost reduction and productivity increase of the laminate, preferably 20 to 200 µm, more preferably 30 to 150 µm, even more preferably 40 to 100 µm.

In the case where the 4-methyl-1-pentene-based resin layer (B) is formed of 2 or more layers, preferably, the total thickness of the 4-methyl-1-pentene-based resin layer (B) falls within the above-mentioned range.

In one embodiment of the present invention, the 4-methyl-1-pentene-based resin layer (B) may contain any other component than a 4-methyl-1-pentene-based resin within a range not detracting from the advantageous effects of the present invention.

In one embodiment of the present invention, the content of the 4-methyl-1-pentene-based resin in the 4-methyl-1-pentene-based resin layer (B) is, based on the 4-methyl-1-pentene-based resin layer (B) (100% by mass), preferably 70 to 100% by mass, more preferably 80 to 100% by mass, even more preferably 90 to 100% by mass, further more preferably 95 to 100% by mass.

For example, in the case where the 4-methyl-1-pentene-based resin layer is made soft for the purpose of lowering the tensile modulus of elasticity of the 4-methyl-1-pentene-based resin layer as mentioned above, the 4-methyl-1-pentene-based resin (B) may be formed of a mixture prepared by mixing a 4-methyl-1-pentene-based resin and any other α-olefin than 4-methyl-1-pentene. Also the 4-methyl-1-pentene-based resin layer (B) may be formed of a copolymer of 4-methyl-1-pentene and any other α-olefin than 4-methyl-1-pentene.

Examples of the other α-olefin than 4-methyl-1-pentene include α-olefins having 2 to 20 carbon atoms such as ethylene, propylene, 1-butene, 1-hexene, 1-octene, 1-dodecene, 1-decene, 1-tetradecene, 1-hexadecene, 1-octadecene, and 1-eicosene.

### <Adhesion Strength by adhesion-enhancing layer (A) between base paper and 4-methyl-1-pentene-based resin layer (B)>

The laminate of the present invention has a laminated structure of a base paper, an adhesion-enhancing layer (A) and a 4-methyl-1-pentene-based resin layer (B) arranged in that order. The adhesion-enhancing layer (A) arranged between the base paper and the 4-methyl-1-pentene-based resin layer (B) improves the adhesion strength between the base paper and the 4-methyl-1-pentene-based resin layer (B), and even after high-temperature treatment to form a synthetic leather on the laminate, a sufficient adhesion strength can be maintained. The adhesion strength between the base paper and the 4-methyl-1-pentene-based resin layer (B) in the laminate is preferably such that, even after high-temperature treatment, the strength is still 980 mN/15 mm or more or base paper-layer breakage may occur after high-temperature treatment.

In this description, "base paper-layer breakage" means a phenomenon that, as a result of that the adhesion strength of the adhesion-enhancing layer (A) is too large, the base paper and the 4-methyl-1-pentene-based resin layer (B) do not delaminate therebetween but the base paper and the side of the adhesion-enhancing layer (A) or the side of the 4-methyl-1-pentene-based resin layer (B) are broken.

When a synthetic leather is formed on the laminate having such an adhesion strength and peeled therefrom, the adhesion strength between the base paper and the 4-methyl-1-pentene-based resin layer (B) can be a sufficiently larger value than the peel strength of the synthetic leather, and therefore the synthetic layer can be stably peeled. A measurement method and an evaluation method for the adhesion strength of the laminate are described hereinunder in the section of Examples.

### [Production Method for Laminate]

The laminate of the present invention has a laminated structure of a base paper, an adhesion-enhancing layer (A) and a 4-methyl-1-pentene-based resin layer (B) arranged in that order. A production method for the laminate of the present invention is not specifically limited. For example, the method includes a step applying an aqueous solution for adhesion-enhancing layer formation on a base paper, a step of heating and drying it to form an adhesion-enhancing layer (A) on the base paper, and a step of forming a 4-methyl-1-pentene-based resin layer (B) on the adhesion-enhancing layer (A).

Examples of the method of applying an aqueous solution for adhesion-enhancing layer formation on a base paper includes a spin coating method, a spray coating method, a bar coating method, a knife coating method, a roll coating method, a roll knife coating method, a blade coating method, a die coating method, and a gravure coating method.

The heating and drying treatment for forming the adhesion-enhancing layer (A) is carried out, for example, at 80°C to 180°C for 30 seconds to 2 minutes or so.

Formation of the 4-methyl-1-pentene-based resin layer (B) on the adhesion-enhancing layer (A) can be carried out, for example, by lamination. For the lamination, for example, an extrusion lamination method is employable, which is a lamination method capable of rapidly laminating the 4-methyl-1-pentene-based resin layer. A laminate having two or more layers of the 4-methyl-1-pentene-based resin layer (B) can be produced, for example, using a co-extrusion processing machine that enables co-extrusion lamination.

In one embodiment of the present invention, the laminate prepared in the step of forming a 4-methyl-1-pentene-based resin layer (B) on an adhesion-enhancing layer (A) is, before the 4-methyl-1-pentene-based resin layer (B) is cooled and solidified, pressed against a cooling roll that has been surface-smoothed, for example, by mirror-finishing and the 4-methyl-1-pentene-based resin layer (B) is thereby surface-smoothed. Specifically, the laminate is led to pass between a cooling roll and a backup roll while pressurized therebetween, for example, in such a manner that the 4-methyl-1-pentene-based resin layer (B) is kept in contact with the cooling roll and the base paper is in contact with the backup roll. Accordingly, a laminate in which the surface of the 4-methyl-1-pentene-based resin layer (B) is highly smooth can be prepared.

In another embodiment of the present invention, the laminate prepared in the step of forming a 4-methyl-1-pentene-based resin layer (B) on an adhesion-enhancing layer (A) is, before the 4-methyl-1-pentene-based resin layer (B) is cooled and solidified, pressed against an embossing roll having a desired engraved mark therearound and the surface of the 4-methyl-1-pentene-based resin layer (B) is thereby engraved. Specifically, the laminate is led to pass between an embossing roll and a backup roll while pressurized therebetween, for example, in such a manner that the 4-methyl-1-pentene-based resin layer (B) is kept in contact with the embossing roll and the base paper is in contact with the backup roll. Accordingly, the engraved mark of the surface of the embossing roll is transferred to the surface of the 4-methyl-1-pentene-based resin layer (B) to give a laminate having an embossed surface of a sharp embossed profile.

### [Use Method for Laminate]

The laminate of the present invention can be used, for example, as a casting paper.

The laminate of the present invention can secure the adhesiveness between the base paper and the 4-methyl-1-pentene-based resin layer (B) even at high temperatures. For example, in the case where a synthetic leather or a plastic film to be produced is formed of a polyvinyl chloride resin or an urethane resin, the adhesiveness between the base paper and the 4-methyl-1-pentene-based resin layer (B) can be sufficiently maintained even at a temperature necessary for gelling a raw material of a sol composition of a polyvinyl chloride or at a high temperature necessary for urethanation of an urethane prepolymer. In addition, the surface sharpness of the 4-methyl-1-pentene-based resin layer (B) can also be maintained. Accordingly, the laminate of the present invention can be used as a casting paper in a production process including a heating step at 130°C or higher and further in a heating step at 200°C or higher.

Specifically, for example, in production of a synthetic leather and a plastic film, when the casting paper is used, the adhesiveness between the base paper and the 4-methyl-1-pentene-based resin layer (B) can be sufficiently maintained even though the heating temperature in the heating step is 130°C or higher, and further 200°C or higher, and in addition, the sharpness of the surface of the 4-methyl-1-pentene-based resin layer (B) can be maintained, and therefore, the surface design of the resultant synthetic leather and plastic film can be finished to have a high-level sharpness.

Here, the laminate of the present invention is favorably used especially as a casting paper for synthetic leather production.

Specifically, on the 4-methyl-1-pentene-based resin layer (B) as a release layer of the laminate of the present invention, a resin for synthetic leather production such as a polyvinyl chloride-based resin is applied, then heated to form a polyvinyl chloride-based resin layer thereon, and further, a base fabric is stuck thereto via an adhesive and matured. Finally, along with the base fabric, the polyvinyl chloride-based resin layer is peeled from the casting paper to produce a synthetic leather. The laminate of the present invention can maintain sufficient adhesiveness between the base paper and the 4-methyl-1-pentene-based resin layer (B) even at 130°C or higher, and further even at 200°C or higher. In addition, the sharpness of the surface of the 4-methyl-1-pentene-based resin layer (B) can be maintained. Accordingly, in the case where an enamel-like synthetic leather is produced without separating the base paper and the 4-methyl-1-pentene-based resin layer (B), a synthetic leather having a smooth and glossy surface can be produced. In the case of producing an emboss-patterned synthetic leather, a synthetic leather whose surface has a glossy and sharp embossed profile can be produced.

### Examples

The present invention is described more specifically with reference to the following Examples, but the present invention is not limited to the following Examples.

### [Method for Measurement of Physical Properties]

The physical properties described in the following Production Examples, Examples and Comparative Examples were measured according to the following methods.

### <Oken-type Smoothness>

The Oken-type smoothness was measured according to JIS P8155:2010, using an Oken-type air permeability and smoothness tester (Model Number: KY-5, from Asahi Seiko Co., Ltd.).

### <Tensile Modulus of Elasticity>

From the single layer of a 4-methyl-1-pentene-based resin used in Examples and Comparative Examples, a test piece of Type IV stipulated in ASTM D638 was formed, and at a test speed of 50 mm/min, a chuck-to-chuck distance of 65 mm and at 23°C, the tensile modulus of elasticity (MPa) thereof was measured according to a tensile test of ASTM D638.

### <Layer Thickness >

The layer thickness was measured using a constant-pressure thickness meter (Model Number: PG-02J, from TECLOCK Co., Ltd., according to a standard of measure: JIS K6783:1994, Z1702:1994, Z1709:1995).

### [Examples 1 to 10, and Comparative Examples 1 to 14]

Laminates of Examples 1 to 10 and Comparative Examples 1 to 14 were produced according to the following process.

### <Example 1>

Using a Mayer bar, an aqueous solution for adhesion-enhancing layer formation was applied to the cast-coated surface of a cast-coated paper (from Nippon Paper Industries Co., Ltd., Oken-type smoothness: 5000 seconds, weight: 165 g/m²) used as a base paper, and heated at 100°C for 1 minute to form an adhesion-enhancing layer having a coating amount of 3 g/m².

The aqueous solution for adhesion-enhancing layer formation was prepared according to the following process.

A pearl necklace-type colloidal silica (trade name: Snowtex (registered trademark) from Nissan Chemical Corporation, Model Number: ST-PS-M, solid concentration 20% by mass (solvent: water), average particle size 0.10 to 0.15 µm) was used as silica particles (S) for a filler.

For a polyvinyl alcohol (P) for a binder, a polyvinyl alcohol 1 (trade name: Kuraray Poval (registered trademark) from Kuraray Co., Ltd., Model Number; PVA117, average polymerization degree: 1700, saponification degree: 98 to 99%) and a polyvinyl alcohol 2 (trade name: Kuraray Poval (registered trademark) from Kuraray Co., Ltd., Model Number; PVA105, average polymerization degree: 500, saponification degree: 98 to 99%) were mixed in a mass ratio of 1/1 to prepare a polyvinyl alcohol (average polymerization degree: 1200) (abbreviated as "PVA" in Table 1).

A mixture of the silica particles (S) and the polyvinyl alcohol (P) mixed in a ratio of S/P = 20/6.7 (by mass) was diluted with water to prepare an aqueous solution having a mixture concentration of 10% by mass to be an aqueous solution for adhesion-enhancing layer formation.

In this Example, the mass ratio is a value as calculated in terms of the active ingredient (solid content), and the same shall apply to the ratio by mass shown below.

Next, using a laminator equipped with a twin-screw melt-extruder and a multilayer co-extrusion die, two 4-methyl-1-pentene-based resin layers were laminated each in a thickness of 25 µm on the side of the cast-coated surface of the base paper having the adhesion-enhancing layer formed thereon, thereby forming a laminate. In the following description, the 4-methyl-1-pentene-based resin layer X means the layer positioned on the adhesion-enhancing layer, and the 4-methyl-1-pentene-based resin layer Y means the layer positioned on the 4-methyl-1-pentene-based resin layer X.

The resin melting temperature in lamination was 305°C.

The 4-methyl-1-pentene-based resin layer X in contact with the adhesion-enhancing layer was formed of a 4-methyl-1-pentene-based resin having a melt flow rate (MFR) of 100 g/10 min, a density of 0.834 g/cm³, and a melting point of 226°C (trade name: DX310, from Mitsui Chemicals, Inc.). The tensile modulus of elasticity of the 4-methyl-1-pentene-based resin layer X was 850 MPa.

The 4-methyl-1-pentene-based resin layer Y to be an outermost layer formed on the 4-methyl-1-pentene-based resin layer X was formed of a 4-methyl-1-pentene-based resin having a melt flow rate (MFR) of 100 g/10 min, a density of 0.832 g/cm³, and a melting point of 232°C (trade name: DX231, from Mitsui Chemicals, Inc.). The tensile modulus of elasticity of the 4-methyl-1-pentene-based resin layer Y was 1860 MPa.

Immediately after lamination, the resultant laminate was led to pass through rolls and cooled therebetween so that the 4-methyl-1-pentene-based resin layer Y could be kept in contact with a cooling roll.

The cooling water temperature in the cooling roll was 23°C.

The cooling roll was one that had been mirror-polished (roll surface roughness: Rₘₐₓ 0.05 µm or less, hard chromium-plated supermirror finishing) in order that, in using the laminate as a casting paper for synthetic leather production, the resultant synthetic leather could have an enamel-like surface. Accordingly, the surface of the 4-methyl-1-pentene-based resin layer Y of the outermost layer of the laminate was a highly glossy surface having a gloss level of 80% or more under the condition of a reflection angle of 20°.

Using the corona discharging device attached to the laminator, the adhesion-enhancing layer formed on the base paper was corona-discharged before formation of the 4-methyl-1-pentene-based resin layer thereon.

### <Example 2>

A laminate was produced according to the same method as in Example 1, except that the mass ratio of the silica particles (S) to the polyvinyl alcohol (P) in the aqueous solution for adhesion-enhancing layer formation was changed to S/P = 20/10.

### <Example 3>

A laminate was produced according to the same method as in Example 1, except that the mass ratio of the silica particles (S) to the polyvinyl alcohol (P) in the aqueous solution for adhesion-enhancing layer formation was changed to S/P = 20/15.

### <Example 4>

A laminate was produced according to the same method as in Example 1, except that the mass ratio of the silica particles (S) to the polyvinyl alcohol (P) in the aqueous solution for adhesion-enhancing layer formation was changed to S/P = 20/20.

### <Example 5>

A laminate was produced according to the same method as in Example 1, except that a coated paper (from Nippon Paper Industries Co., Ltd., Oken-type smoothness: 200 seconds, weight: 165 g/m²) was used in place of the cast-coated paper.

### <Example 6>

A laminate was produced according to the same method as in Example 1, except that a super-calendered wood-free paper (from Nippon Paper Industries Co., Ltd., Oken-type smoothness: 120 seconds, weight: 127.9 g/m²) was used in place of the cast-coated paper.

### <Example 7>

A laminate was produced according to the same method as in Example 2, except that a wood-free paper (from Nippon Paper Industries Co., Ltd., Oken-type smoothness: 40 seconds, weight: 127.9 g/m²) was used in place of the cast-coated paper and the coating amount of the adhesion-enhancing layer was changed to 2.4 g/m².

### <Example 8>

A laminate was produced according to the same method as in Example 7, except that the coating amount of the adhesion-enhancing layer was changed to 3.2 g/m².

### <Example 9>

According to the same method as in Example 1, except that the cooling roll used for cooling the laminate immediately after lamination in Example 1 was changed from the mirror-finished roll to an embossing roll so as to give a hologram-like design to the surface of a synthetic leather, a laminate having an embossed surface was produced. As the embossing roll, an engraved roll having a hologram-like design engraved on the surface thereof (Lintec Corporation's specification standard: R301) was used.

### <Example 10>

According to the same method as in Example 9, except that a coated paper (from Nippon Paper Industries Co., Ltd., Oken-type smoothness: 200 seconds, weight: 165 g/m²) was used as the base paper, a laminate having an embossing surface for imparting a hologram-like design to the surface of a synthetic leather was produced.

### <Comparative Example 1>

A laminate was produced according to the same method as in Example 1, except that the mass ratio of the silica particles (S) to the polyvinyl alcohol (P) in the aqueous solution for adhesion-enhancing layer formation was changed to S/P = 20/40.

### <Comparative Example 2>

A laminate was produced according to the same method as in Example 1, except that the polyvinyl alcohol (P) was not blended in the aqueous solution for adhesion-enhancing layer formation (in Table 1, the mass ratio of the silica particles (S) to the polyvinyl alcohol (P) was expressed as S/P = 20/0).

### <Comparative Example 3>

A laminate was produced according to the same method as in Example 2, except that the filler in the aqueous solution for adhesion-enhancing layer formation was changed to a spherical colloidal silica (trade name: Snowtex (registered trademark) from Nissan Chemical Corporation, Model Number: ST-30L, solid concentration 30% by mass (solvent: water), average particle size 0.04 to 0.05 um).

### <Comparative Example 4>

A laminate was produced according to the same method as in Example 2, except that the filler in the aqueous solution for adhesion-enhancing layer formation was changed to a spherical colloidal silica (from Nissan Chemical Corporation, Model Number: MP-2040, solid concentration 40% by mass (solvent: water), average particle size 0.17 to 0.23 µm).

### <Comparative Example 5>

A laminate was produced according to the same method as in Example 2, except that the filler in the aqueous solution for adhesion-enhancing layer formation was changed to a spherical colloidal silica (from Nissan Chemical Corporation, Model Number: MP-4540M, solid concentration 40% by mass (solvent: water), average particle size 0.42 to 0.48 µm).

### <Comparative Example 6>

A laminate was produced according to the same method as in Example 2, except that the filler in the aqueous solution for adhesion-enhancing layer formation was changed to a fine powdery silica (trade name: Sylysia 350, from Fuji Silysia Chemical Ltd., average particle size 1.8 µm).

### <Comparative Example 7>

A laminate was produced according to the same method as in Example 2, except that the filler in the aqueous solution for adhesion-enhancing layer formation was changed to a rice starch (Komedempun Kikyo, from Matsutani Chemical Industry Co., Ltd., average particle size 5 µm).

### <Comparative Example 8>

A laminate was produced according to the same method as in Example 2, except that the filler in the aqueous solution for adhesion-enhancing layer formation was changed to an oxidized starch (from Nihon Kako Shokuhin Co., Ltd., Model Number: MS#3800).

### <Comparative Example 9>

A laminate was produced according to the same method as in Example 2, except that the binder in the aqueous solution for adhesion-enhancing layer formation was changed to a polyurethane (trade name: Superflex 210, from Daiichi Kagaku Industries Limited).

### <Comparative Example 10>

A laminate was produced according to the same method as in Example 2, except that the binder in the aqueous solution for adhesion-enhancing layer formation was changed to styrene-butadiene latex resin (from Nippon A & L Inc., Model Number: SN307R) (abbreviated as "SBR" in Table 1).

### <Comparative Example 11>

A laminate was produced according to the same method as in Example 1, except that the adhesion-enhancing layer was not formed.

### <Comparative Example 12>

A laminate was produced according to the same method as in Example 7, except that the adhesion-enhancing layer was not formed.

### <Comparative Example 13>

In the same manner as in Example 9, except that a wood-free paper (from Nippon Paper Industries Co., Ltd., Oken-type smoothness: 40 seconds, weight: 127.9 g/m²) was used as the base paper and the adhesion-enhancing layer was not formed, a laminate having an embossing surface for imparting a hologram-like design to the surface of a synthetic leather was produced.

### <Comparative Example 14>

In the same manner as in Comparative Example 13, except that the thickness of the 4-methyl-1-pentene-based resin layer X and the 4-methyl-1-pentene-based resin layer Y was changed from 25 µm each (total: 50 µm) to 40 µm (total: 80 µm), a laminate having an embossing surface for imparting a hologram-like design to the surface of a synthetic leather was produced.

### [Evaluation Methods for Laminate]

The laminates of Examples 1 to 8 and Comparative Examples 1 to 12 were evaluated in point of the adhesion strength between the base paper and the 4-methyl-1-pentene-based resin layer.

### <Evaluation of Adhesion Strength>

The adhesion strength of the unheated laminate, the laminate heated at 130°C for 2 minutes, the laminate heated at 180°C for 2 minutes and the laminate heated at 220°C for 2 minutes were measured according to the following method.

First, an unheated sample of the laminate of Examples and Comparative Examples, a sample thereof heated at 130°C with an air drier for 2 minutes, and a sample thereof heated at 180°C for 2 minutes were prepared, and these samples were cut into a size of 200 mm × 15 mm. In detail, MD (machine direction) of the sample was 200 mm and CD (cross direction) thereof was 15 mm.

In an environment at a temperature of 23°C and a relative humidity of 50%, using a universal tensile tester (from Orientec Co., Ltd., Model Number: Tensilon RTC-1210A), the base paper and the 4-methyl-1-pentene-based resin layer of the sample were peeled to measure the adhesion strength (mN/15 mm), according to the measurement method for adhesion strength of JIS Z0237:2009. Specifically, the base paper side of the laminate was fixed to a flat plate, and the 4-methyl-1-pentene-based resin layer side was folded, and pulled at a peel angle of 180 degrees and at a speed of 300 mm/min, and the resultant load was referred to as an adhesion strength.

In measurement of the adhesion strength of the laminate, the sample was checked for base paper-layer breakage.

Regarding the adhesion strength of the laminate heated at 220°C for 2 minutes, a synthetic leather was formed on each sample and the synthetic leather was peeled in evaluation of peelability of the synthetic leather to be mentioned hereinunder, and then the remaining laminate was tested as a sample for evaluation for the adhesion strength thereof in the same manner as above.

### [Evaluation Method for Laminate as casting paper for synthetic leather production]

The laminates of Examples and Comparative Examples were evaluated in point of the performance thereof as a casting paper for synthetic leather production.

### <Evaluation of Synthetic Leather Peelability>

First, a sol composition of a polyvinyl chloride resin was applied to the surface (release surface) of the 4-methyl-1-pentene-based resin layer Y of the laminate, and a base fabric was stuck to the sol composition coating. This was heated with an air drier at 220°C for 2 minutes to form a film of the polyvinyl chloride resin sol composition, and then cooled to prepare a synthetic leather for evaluation formed of a polyvinyl chloride resin layer and a base fabric. Subsequently, the synthetic leather for evaluation was peeled from the release surface of the laminate, and the peelability of the synthetic leather was evaluate according to the following criteria.

A case in which the synthetic leather was smoothly peeled was given "A (good peelability)"; and a case where zipping occurred, or where the synthetic leather broke, or where the synthetic leather did not peel and the casting paper for synthetic leather production broke at any interlayer therein was given "B (poor peelability)".

The components of the polyvinyl chloride resin sol composition were as follows.
Polyvinyl chloride: 50 parts by mass
Bis-2-ethylhexyl phthalate (plasticizer): 41 parts by mass
Azodicarbonamide (foaming agent): 2 parts by mass
Black colorant: 9 parts by mass

### <Evaluation of Adhesiveness>

The adhesiveness of the casting paper for synthetic leather production was evaluated from the results of the adhesion strength of the laminate heated at 220°C for 2 minutes, according to the following criteria.
A: The adhesion strength is 980 mN/15 mm or more.
B: The adhesion strength is less than 980 mN/15 mm.

### <Evaluation of Sharpness>

The surface condition of the 4-methyl-1-pentene-based resin layer Y of the release surface of the laminate before production of a synthetic leather (before coated with the polyvinyl chloride resin sol composition), and the surface condition of the contact surface with the release surface of the synthetic leather produced by applying the sol composition to the release surface were visually checked and evaluated. A case where the surface profile of the release surface of the laminate was equivalently transferred on the surface of the formed synthetic leather with no problem was given "A (good sharpness)", and a case where the surface profile of the casting paper was not transferred to the formed synthetic leather and was significantly damaged was given "B (poor sharpness)".

The constitutions of the laminates of Examples 1 to 10 and Comparative Examples 1 to 14 are shown in Table 1.

**Table 1**

| | Base Papeer | | Adhesion Enhancing Layer | | | | | | 4-Methyl-1-pentene-based Resin Layer | Surface of Synthetic Leather |
|---|---|---|---|---|---|---|---|---|---|---|
| | Kind | Oken-type Smoothness (sec) | Filler | | | Binder | Blending Ratio (S/P Content Ratio) (ratio by mass) | Coating Amount (g/m²) | Thickness X/Y (µm) | |
| | | | Component | Shape | Average Particle Size (µm) | Component | | | | |
| Example 1 | cast-coated paper | 5000 | colloidal silica | pearl necklace-like | 0.10 to 0.15 | PVA | 20/6.7 | 3 | 25/25 | enamel-like |
| Example 2 | cast-coated paper | 5000 | colloidal silica | pearl necklace-like | 0.10 to 0.15 | PVA | 20/10 | 3 | 25/25 | enamel-like |
| Example 3 | cast-coated paper | 5000 | colloidal silica | pearl necklace-like | 0.10 to 0.15 | PVA | 20/15 | 3 | 25/25 | ename-like |
| Example 4 | cast-coated paper | 5000 | colloidal silica | pearl necklace-like | 0.10 to 0.15 | PVA | 20/20 | 3 | 25/25 | ename-like |
| Comparative Example 1 | cast-coated paper | 5000 | colloidal silica | pearl necklace-like | 0.10 to 0.15 | PVA | 20/40 | 3 | 25/25 | enamel-like |
| Comparative Example 2 | cast-coated paper | 5000 | colloidal silica | pearl necklace-like | 0.10 to 0.15 | no | 20/0 | 3 | 25/25 | enamel-like |
| Comparative Example 3 | cast-coated paper | 5000 | colloidal silica | spherical | 0.04 to 0.05 | PVA | 20/10 | 3 | 25/25 | enamel-like |
| Comparative Example 4 | cast-coated paper | 5000 | colloidal silica | spherical | 0.17 to 0.23 | PVA | 20/10 | 3 | 25/25 | enamel-like |
| Comparative Example 5 | cast-coated paper | 5000 | colloidal silica | spherical | 0.42 to 0.48 | PVA | 20/10 | 3 | 25/25 | enamel-like |
| Comparati've Example 6 | cast-coated paper | 5000 | fine powdery silica | powdery | 1.8 | PVA | 20/10 | 3 | 25/25 | ename-like |
| Comparative Example 7 | cast-coated paper | 5000 | rice starch | spherical | 5 | PVA | 20/10 | 3 | 25/25 | enamel-like |
| Comparative Example 8 | cast-coated paper | 5000 | colloidal silica | pearl necklace-like | 0.10 to 0.15 | oxidized starch | 20/10 | 3 | 25/25 | enamel-like |
| Comparative Example 9 | cast-coated paper | 5000 | colloidal silica | pearl necklace-like | 0.10 to 0.15 | polyurethane | 20/10 | 3 | 25 / 25 | enamel-like |
| Comparative Example 10 | cast-coated paper | 5000 | colloidal silica | pearl necklace-like | 0.10 to 0.15 | SBR | 20/10 | 3 | 25/25 | enamel-like |
| Comparative Example 11 | cast-coated paper | 5000 | no | - | - | no | - | 0 | 25/25 | enamel-like |
| Example 5 | coated paper | 200 | colloidal silica | pearl necklace-like | 0.10 to 0.15 | PVA | 20/6.7 | 3 | 25/25 | enamel-like |
| Example 6 | wood-free paper | 120 | colloidal silica | pearl necklace-like | 0.10 to 0.15 | PVA | 20/6.7 | 3 | 25/25 | enamel-like |
| Example 7 | wood-free | 40 | colloidal silica | pearl necklace-like | 0.10 to 0.15 | PVA | 20/10 | 2.4 | 25/25 | enamel-like |
| Example 8 | paper wood-free paper | 40 | colloidal silica | pearl necklace-Eke | 0.10 to 0.15 | PVA | 20/10 | 3.2 | 25/25 | enamel-like |
| Comparative Example 12 | wood-free paper | 40 | no | - | - | no | - | 0 | 25/25 | enamel-like |
| Example 9 | cast-coated paper | 5000 | colloidal silica | pearl necklace-like | 0.10 to 0.15 | PVA | 20/6.7 | 3 | 25/25 | hologram-like |
| Example 10 | coated paper | 200 | colloidal silica | pearl necklace-like | 0.10 to 0.15 | PVA | 20/6.7 | 3 | 25/25 | hologram-like |
| Comparative Example 13 | wood-free paper | 40 | no | - | - | no | - | 3 | 25/25 | hologram-like |
| Comparative Example 14 | wood-free paper | 40 | no | - | - | no | - | 3 | 40/40 | hologram-like |

Next, the adhesion strength and the results of evaluation as a casting paper for synthetic leather production of the laminates of Examples 1 to 4 and Comparative Examples 1 to 11 are shown in Table 2.

**Table 2**

| | Adhesion-Enhancing Layer (A) | | | | | Adhesion Strength (mN/15 mm) | | | | Evaluation of Casting paper | | |
|---|---|---|---|---|---|---|---|---|---|---|---|---|
| | Filler | | | Binder | Blending Ratio (S/P Content Ratio) (ratio by mass) | unheated | heated at 130°C for 2 min | heated at 180°C for 2 min | heated at 220°C ti for 2 min | Peelability | Adhesiveness | Sharpness |
| | Component | Shape | Average Particle Size (µm) | Component | | | | | | | | |
| Example 1 | colloidal silica | pearl necklace-like | 0.10 to 0.15 | PVA | 20/6.7 | 690 | 2570 | 4800 | 3080 | A | A | A |
| Example 2 | colloidal silica | pearl necklace-like | 0.10 to 0.15 | PVA | 20/10 | 4580 | 4490 | 4980 | 3050 | A | A | A |
| Example 3 | colloidal silica | pearl necklace-like | 0.10 to 0.15 | PVA | 20/15 | 5160 | 5694 | 5290 | 2060 | A | A | A |
| Example 4 | colloidal silica | pearl necklace-like | 0.10 to 0.15 | PVA | 20/20 | 5470 | 2160 | 5000 | 3140 | A | A | A |
| Comparative Example 1 | colloidal silica | pearl necklace-like | 0.10 to 0.15 | PVA | 20/40 | 20 | 0 | 0 | 0 | B | B | B |
| Comparative Example 2 | colloidal silica | pearl necklace-like | 0.10 to 0.15 | no | 20/0 | 30 | 30 | 30 | 600 | A | B | B |
| Comparative Example 3 | colloidal silica | spherical | 0.04 to 0.05 | PVA | 20/10 | 110 | 50 | 30 | 40 | B | B | B |
| Comparative Example 4 | colloidal silica | spherical | 0.17 to 0.23 | PVA | 20/10 | 5030 | 630 | 350 | 210 | A | B | B |
| Comparative Example 5 | colloidal silica | spherical | 0.42 to 0.48 | PVA | 20/10 | 1140 | 250 | 120 | 220 | A | B | B |
| Comparative Example 6 | fine powdery silica | powdery | 1.8 | PVA | 20/10 | 620 | 210 | 130 | 150 | A | B | B |
| Comparative Example 7 | rice starch | spherical | 5 | PVA | 20/10 | 0 | 0 | 0 | 0 | B | B | B |
| Comparative Example 8 | colloidal silica | pearl necklace-like | 0.10 to 0.15 | oxidized starch | 20/10 | 470 | 250 | 150 | 80 | B | B | B |
| Comparative Example 9 | colloidal silica | pearl necklace-like | 0.10 to 0.15 | polyurethane | 20/10 | 4280 | 1130 | 1350 | 330 | A | B | B |
| Comparative Example 10 | colloidal silica | pearl necklace-like | 0.10 to 0.15 | SBR | 20/10 | 2890 | 1760 | 1980 | 320 | A | B | B |
| Comparative Example 11 | no | - | | no | - | 764 | 340 | 210 | 80 | B | B | B |

The results in Table 2 confirm the following.

First, from comparison between the results in Comparative Example 11 and the results in Examples 1 to 4, it is known that, in the laminates having an adhesion-enhancing layer of Examples 1 to 4, the adhesiveness between the base paper and the 4-methyl-1-pentene-based resin layer significantly improved as compared with that in the laminate not having an adhesion-enhancing layer of Comparative Example 11, and the adhesiveness was kept still good even when the laminates were heated.

However, from the results in Comparative Examples 1 and 2, it is known that, when the content ratio (S/P) of the necklace-like colloidal silica particles (S) to the polyvinyl alcohol (P) in the adhesion-enhancing layer overstepped a range of 20/5 to 20/30 as a ratio by mass, the adhesiveness between the base paper and the 4-methyl-1-pentene-based resin layer could not be secured.

From the results in Comparative Examples 3 to 7, it is known that, when the filler in the adhesion-enhancing layer is any other than a necklace-like colloidal silica, the adhesiveness between the base paper and the 4-methyl-1-pentene-based resin layer could not be secured. In particular, from the results in Comparative Examples 3 to 5, since the adhesiveness between the base paper and the 4-methyl-1-pentene-based resin layer could not be secured in the case where the filler in the adhesion-enhancing layer is a spherical colloidal silica, it is known that using a necklace-like colloidal silica as a filler is important for bettering the adhesiveness of the adhesion-enhancing layer and using a pearl-like colloidal silica as a filler is preferred.

From the results in Comparative Examples 8 to 10, it is known that, when the binder in the adhesion-enhancing layer is any other than a polyvinyl alcohol, the adhesiveness between the base paper and the 4-methyl-1-pentene-based resin layer could not be secured.

The laminates having an adhesion-enhancing layer of Examples 1 to 4 are excellent in adhesiveness, peelability and surface performance and are excellent in applicability to a casting paper for synthetic leather production, as compared with those of Comparative Examples 1 to 11.

Next, the results of evaluation of the adhesion strength of the laminates of Examples 1, 5 and 6 are shown in Table 3.

**Table 3**

| | Base Paper | | Adhesion Strength (mN/15 mm) | |
|---|---|---|---|---|
| | Kind | Oken-type Smoothness (sec) | unheated | heated at 220°C for 2 min |
| Example 1 | cast-coated paper | 5000 | 690 | 3080 |
| Example 5 | coated paper | 200 | 5980 | 3040 |
| Example 6 | wood-free paper | 120 | base paper-layer breakage | 1860 |

The results of Examples 1, 5 and 6 in Table 3 confirm the following.

Even in the case of using a base paper having an Oken-type smoothness of 120 seconds to 5000 seconds, the adhesiveness between the base paper and the 4-methyl-1-pentene-based resin layer was sufficiently secured, and it is known that the adhesiveness was still good in the case where the laminate was heated. In view of the results and the results in Table 1, it is known that, when a base paper having an Oken-type smoothness of 40 seconds or more is used, the adhesiveness between the base paper and the 4-methyl-1-pentene-based resin layer can be sufficiently secured by providing an adhesion-enhancing layer therebetween, and the adhesiveness can be secured still in the case where the laminate is heated.

Next, the adhesion strength and the results of evaluation as a casting paper for synthetic leather production of the laminates of Examples 7 and 8 and Comparative Example 12 are shown in Table 4.

**Table 4**

| | Adhesion-Enhancing Layer | Adhesion Strength (mN/15 mm) | | | | Evaluation of Casting paper | |
|---|---|---|---|---|---|---|---|
| | Coating Amount (g/m²) | unheated | heated at 130°C for 2 min | heated at 180°C for 2 min | heated at 220°C for 2 min | Peelability | Adhesiveness |
| Example 7 | 2.4 | base paper-layer breakage | base paper-layer breakage | base paper-layer breakage | 1330 | A | A |
| Example 8 | 3.2 | base paper-layer breakage | base paper-layer breakage | base paper-layer breakage | 1100 | A | A |
| Comparative Example 12 | 0 | 2190 | 1670 | 1660 | 627 | A | B |

The results in Table 4 confirm the following.

From the results of Examples 7 and 8 and Comparative Example 12, it is known that, in the case of using a base paper having an Oken-type smoothness of 40 seconds, there is a significant difference in the adhesiveness between the base paper and the 4-methyl-1-pentene-based resin layer, depending on the presence or absence of the adhesion-enhancing layer. In particular, in the laminate heated at 220°C for 2 minutes, the adhesiveness is greatly improved by providing the adhesion-enhancing layer formed between the base paper and the 4-methyl-1-pentene-based resin layer, as compared with the case where the adhesion-enhancing layer is not provided.

From these results, it is known that, in the case of using a base paper having an Oken-type smoothness of 40 seconds or more and when the base paper and the 4-methyl-1-pentene-based resin layer are directly laminated, the adhesiveness is insufficient especially at high temperatures. It is known that the problem can be solved by using an adhesion-enhancing layer.

Next, the results of evaluation as a casting paper for hologram-like designed synthetic leather production of the laminates of Examples 9 and 10 and Comparative Examples 13 and 14 are shown in Table 5.

**Table 5**

| | Base Paper | | 4- Methyl-1-pentene-based Resin Laver | Evaluation of Casting paper | | |
|---|---|---|---|---|---|---|
| | Kind | Oken-type Smoothness (sec) | Thickness X / Y (µm) | Peelability | Adhesiveness | Sharpness |
| Example 9 | cast-coated paper | 5000 | 25 / 25 | A | A | A |
| Example 10 | coated paper | 200 | 25 / 25 | A | A | A |
| Comparative Example 13 | wood-free paper | 40 | 25 / 25 | B | B | B |
| Comparative Example 14 | wood-free paper | 40 | 40 / 40 | B | B | B |

Table 5 confirms the following.

As known from the results of Examples 9 and 10, even in the case where the surface of the 4-methyl-1-pentene-based resin layer of a release surface of the laminate is hologram-like embossed, the surface profile of the synthetic leather produced using the laminate is comparable to the surface profile of the release surface of the laminate, and is excellent in sharpness.

As opposed to these, in the case of Examples 13 and 14 where a base paper having an Oken-type smoothness of 40 seconds was used, the adhesiveness at high temperatures was insufficient and therefore the peelability of the synthetic leather was not good. In addition, the surface profile of the synthetic leather produced using the laminate significantly differed from the surface profile of the release surface of the laminate, and the sharpness of the surface of the synthetic leather was significantly bad.

### Reference Signs List

- 1a, 1b: Laminate
- 11: Base Paper
- 12: Adhesion-Enhancing Layer
- 13, 13a, 13b: 4-Methyl-1-pentene-based Resin Layer

## Claims

1. A laminate having a laminated structure of a base paper, an adhesion-enhancing layer (A) and a 4-methyl-1-pentene-based resin layer (B) laminated in that order, wherein:
the adhesion-enhancing layer (A) comprises necklace-like colloidal silica-derived silica particles (S) and a polyvinyl alcohol (P), and the content ratio of the silica particles (S) to the polyvinyl alcohol (P) (S/P) is 20/5 to 20/30 as a ratio by mass.

2. The laminate according to claim 1, wherein the necklace-like colloidal silica is a pearl necklace-like one.

3. The laminate according to claim 1 or 2, wherein:
the 4-methyl-1-pentene-based resin layer (B) is formed of 2 or more layers, and
the outermost layer at least on the side opposite to the adhesion-enhancing layer (A) has a tensile modulus of elasticity of 1000 MPa or more.

4. A casting paper comprising the laminate of any one of claims 1 to 3.

5. A casting paper for synthetic leather production, comprising the laminate of any one of claims 1 to 3.
